# EUROPEAN PATENT APPLICATION

(11) **EP 2 688 275 A1**
(43) Date of publication of application: **22.01.2014**
(21) Application number: 12176989.7
(22) Date of filing: 18.07.2012
(51) Int. Cl.: H04M 1/725, G04G 13/02

(54) **Method and apparatus pertaining to a gesture-controlled snooze instruction**

(71) Applicant: BlackBerry Limited, Waterloo, ON N2K 0A7 (CA)
(72) Inventor: Erksson, Marcus, 211 40 Malmö (SE); Gärdenfors, Dan Zacharias, 211 40 Malmö (SE); Hallerström Sjöstedt, Svante Magnus Ulfstand, 211 40 Malmö (SE); Grimberg, Per, 211 40 Malmö (SE); Berglund, Carl Fredrik Alexander, 211 40 Malmö (SE)
(74) Representative: Patel, Binesh

(57) **Abstract**

A control circuit (101) detects a predetermined event (such as but not limited to a particular time of day) and responsively automatically switches to an alarm state. While in this alarm state the control circuit monitors at least one non-snooze-specific area (503) of a user input (103) (such as but not limited to an area of a touch-sensitive display (218)) for a user's gesture (such as but not limited to a swipe). In response to detecting the user's gesture while in the alarm state the control circuit (101) automatically interprets the user's gesture as a snooze instruction regarding the alarm state.

## Description

### Field of Technology

The present disclosure relates to electronic devices, including but not limited to portable electronic devices having touch-sensitive displays and alarm-clock functionality.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, so-called smartphones, wireless personal digital assistants (PDAs), and laptop and tablet-style computers with wireless 802.11 and/or Bluetooth^{™} capabilities.

Many such devices have alarm-clock functionality. Such a device typically permits the user to select a time of day at which the device is to provide an alarm signal (such as an audible alarm signal). Many such devices also provide a so-called snooze function. Pursuant to this snooze functionality the user can assert a specified snooze control surface to cause a currently-provided alarm to be temporarily silenced for some short pre-determined period of time (such as five or ten minutes). At the conclusion of this short snooze window the alarm then again sounds.

Unfortunately, many modem portable electronic devices are not intrinsically well suited to support snooze functionality. The display area of such a device is often relatively small, for example, making it more difficult for the user to successfully locate and assert the snooze button. Successfully accomplishing this task is rendered more challenging by the fact that the user will often be attempting this activity while less than fully awake and cognitively aware.

### Brief Description of the Drawings

FIG. 1 is a block diagram in accordance with the disclosure.

FIG. 2 is a block diagram in accordance with the disclosure.

FIG. 3 is a flow diagram in accordance with the disclosure.

FIG. 4 is a top plan view in accordance with the disclosure.

FIG. 5 is a top plan view in accordance with the disclosure.

FIG. 6 is a top plan view in accordance with the disclosure.

FIG. 7 is a top plan view in accordance with the disclosure.

FIG. 8 is a top plan view in accordance with the disclosure.

FIG. 9 is a top plan view in accordance with the disclosure.

FIG. 10 is a top plan view in accordance with the disclosure.

FIG. 11 is a top plan view in accordance with the disclosure.

FIG. 12 is a top plan view in accordance with the disclosure.

### Detailed Description

The following describes an apparatus and method pertaining to a control circuit configured to detect a predetermined event (such as but not limited to a particular time of day) and to responsively automatically switch to an alarm state. While in this alarm state the control circuit then monitors at least one non-snooze-specific area of a user input (such as but not limited to an area of a touch-sensitive display) for a user's gesture (such as but not limited to a swipe). In response to detecting the user's gesture while in the alarm state the control circuit automatically interprets the user's gesture as a snooze instruction regarding the alarm state.

By one approach the aforementioned non-snooze specific area of the user input can comprise an area of a touch-sensitive display that is devoid of any user-interface indicia such as any of a variety of virtual control surfaces/objects.

These teachings are highly flexible in practice and will accommodate a great number of possible approaches. For example, the aforementioned swipe can comprise any of a variety of swipes. Examples include but are not limited to a substantially-linear swipe, a substantially non-linear swipe, or even an arc (including a clockwise arc or a counter-clockwise arc). The swipe may further comprise, as desired, a plurality of substantially parallel swipes or even alphabetic or numeric characters.

So configured, a relatively generous portion of a portable electronic device's touch-sensitive display can serve in these regards if desired. By permitting the user to make what can be a very simple gesture (if desired) essentially anywhere within the aforementioned portion of the display these teachings permit even a sleepy user, acting with uncertain coordination, visual acuity, and mental cognition, to easily assert a successful snooze instruction.

That said, these teachings will also accommodate more involved and/or powerful functionality as well. As one example in these regards, if the user swipes a numeric character on the display (such as the number "6") the control circuit can responsively initiate a snooze window for six corresponding minutes before reengaging the alarm state.

These teachings are easily implemented in a cost-effective manner and are easily scaled to accommodate a variety of device sizes and device capabilities. These teachings are also easily leveraged in a variety of useful ways. For example, a given device might be preprogrammed to interpret a relatively straight swipe having a length of at least one inch as the aforementioned snooze instruction but these teachings will readily accommodate permitting the user to custom-designate their own preferred swipe shapes through a demonstrate-and-leam process.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

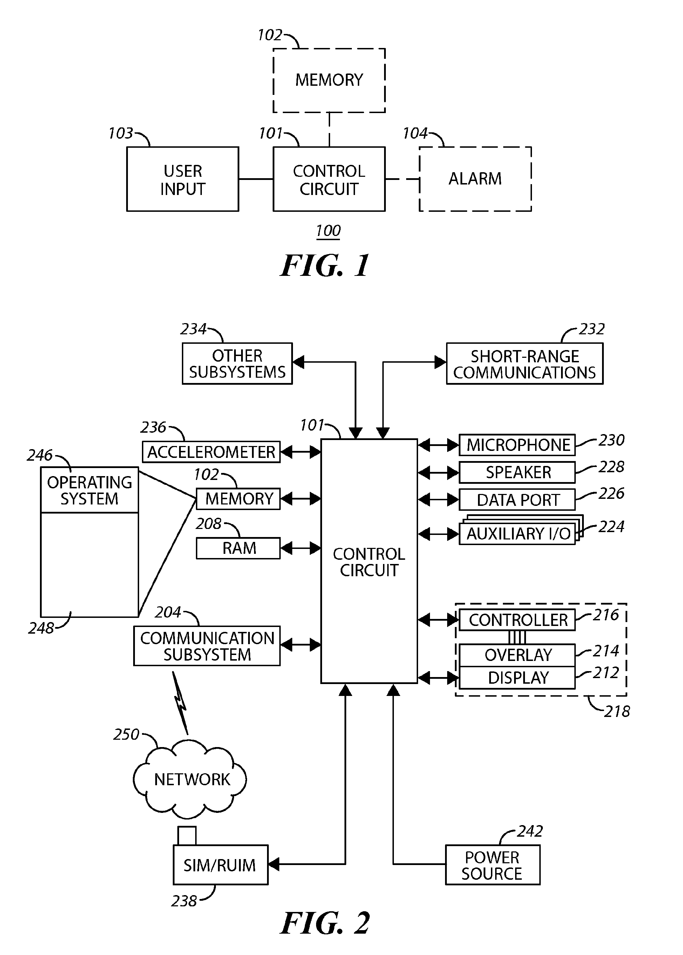

FIG. 1 presents an apparatus 100 configured to accord with at least some of the present teachings. This apparatus 100 includes a control circuit 101. Such a control circuit 101 can comprise a fixed-purpose hard-wired platform or can comprise a partially or wholly programmable platform. These architectural options are well known and understood in the art and require no further description here. This control circuit 101 is configured (for example, by using corresponding programming as will be well understood by those skilled in the art) to carry out one or more of the steps, actions, and/or functions described herein.

Optionally the apparatus 100 also includes a memory 102 that operably couples to the control circuit 101. The memory 102 may be integral to the control circuit 101 or can be physically discrete (in whole or in part) from the control circuit 101 as desired. This memory 102 can also be local with respect to the control circuit 101 (where, for example, both share a common circuit board, chassis, power supply, and/or housing) or can be partially or wholly remote with respect to the control circuit 101 (where, for example, the memory 102 is physically located in another facility, metropolitan area, or even country as compared to the control circuit 101).

This memory 102 can serve, for example, to non-transitorily store the computer instructions that, when executed by the control circuit 101, cause the control circuit 101 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both nonvolatile memory (such as read-only memory (ROM) as well as volatile memory (such as an erasable programmable read-only memory (EPROM).)

The control circuit 101 also operably couples to a user input 103. Generally speaking, this user input 103 serves to detect input from a user employing any of a wide variety of detection modalities. The present teachings will accommodate, for example, detecting a user's physical mid-air gestures (such as the wave of a hand or arm) or that a user has squeezed a particular component. For the sake of illustration and without intending any particular limitations in these regards, the present description will presume the user interface 103 to comprise a touch-sensitive display.

By one approach the apparatus 100 can further comprise an alarm component 104 such as but not limited to a vibratory alarm component and/or an audio alarm component. So configured, the control circuit 101 can selectively instigate, for example, an audible alarm to which a user can respond via the aforementioned user input 103.

By way of further illustration in these regards and again without intending any particular limitations by way of the specificity of these examples, the apparatus 100 can comprise a portable electronic device such as the portable communications device shown in FIG. 2. Corresponding communication functions, including data and voice communications, are performed through a communication subsystem 204. The communication subsystem receives messages from and sends messages to a wireless network 250.

The wireless network 250 may be any type of wireless network, including, but not limited to, a wireless data networks, a wireless voice network, or a network that supports both voice and data communications. The control circuit 101 may also operably couple to a short-range communication subsystem 232 (such as an 802.11 or 802.16-compatible transceiver and/or a Bluetooth^{™}-compatible transceiver). To identify a subscriber for network access, the portable electronic device may utilize a Subscriber Identity Module or a Removable User Identity Module (SIM/RUIM) card 238 for communication with a network, such as the wireless network 250. Alternatively, user identification information may be programmed into a memory 210.

A power source 242, such as one or more rechargeable batteries or a port to an external power supply, powers the electronic device. The control circuit 101 may interact with an accelerometer 236 that may be utilized to detect direction of gravitational forces or gravity-induced reaction forces. The control circuit 101 also interacts with a variety of other components, such as a Random Access Memory (RAM) 208, the aforementioned memory 102, an auxiliary input/output (I/O) subsystem 224, a data port 226, a speaker 228 (that can serve, at least in part, as the aforementioned alarm component 104), a microphone 230, and other device subsystems 234 of choice.

A display 212 can be disposed in conjunction with a touch-sensitive overlay 214 that operably couples to an electronic controller 216. Together these components can comprise a touch-sensitive display 218 that serves as the aforementioned user input 103. Information, such as text, characters, symbols, images, icons, and other items may be displayed on the touch-sensitive display 218 via the control circuit 101.

The touch-sensitive display 218 may employ any of a variety of corresponding technologies including but not limited to capacitive, resistive, infrared, surface acoustic wave (SAW), strain gauge, optical imaging, dispersive signal technology, and/or acoustic pulse recognition-based touch-sensing approaches as are known in the art. If the touch-sensitive display 218 should utilize a capacitive approach, for example, the touch-sensitive overlay 214 can comprise a capacitive touch-sensitive overlay 214. In such a case the overlay 214 may be an assembly of multiple stacked layers including, for example, a substrate, a ground shield layer, a barrier layer, one or more capacitive touch sensor layers separated by a substrate or other barrier, and a cover. The capacitive touch sensor layers may comprise any suitable material, such as indium tin oxide (ITO).

One or more touches, also known as touch contacts or touch events, may be detected by the touch-sensitive display 218. The control circuit 101 may determine attributes of the touch, including a location of a touch. Touch location data may include data for an area of contact or data for a single point of contact, such as a point at or near a center of the area of contact. Generally speaking, a swipe is a touch that begins at one location on the touch-sensitive display 218 and ends at another location (as when the user places their fingertip on the touch-sensitive display 218 and then drags their fingertip along the surface of the touch-sensitive display 218 before finally lifting their fingertip from that surface).

The portable electronic device includes an operating system 246 and software programs, applications, or components 248 that are executed by the control circuit 101 and are typically stored in a persistent, updatable store such as the memory 102. Additional applications or programs may be loaded onto the portable electronic device through the wireless network 250, the auxiliary I/O subsystem 224, the data port 226, the short-range communications subsystem 232, or any other suitable subsystem 234.

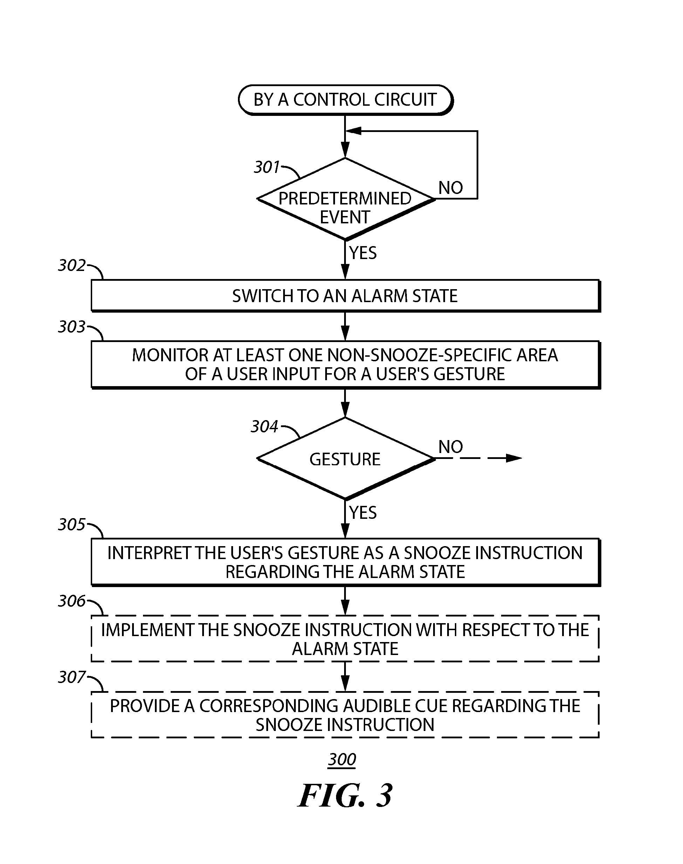

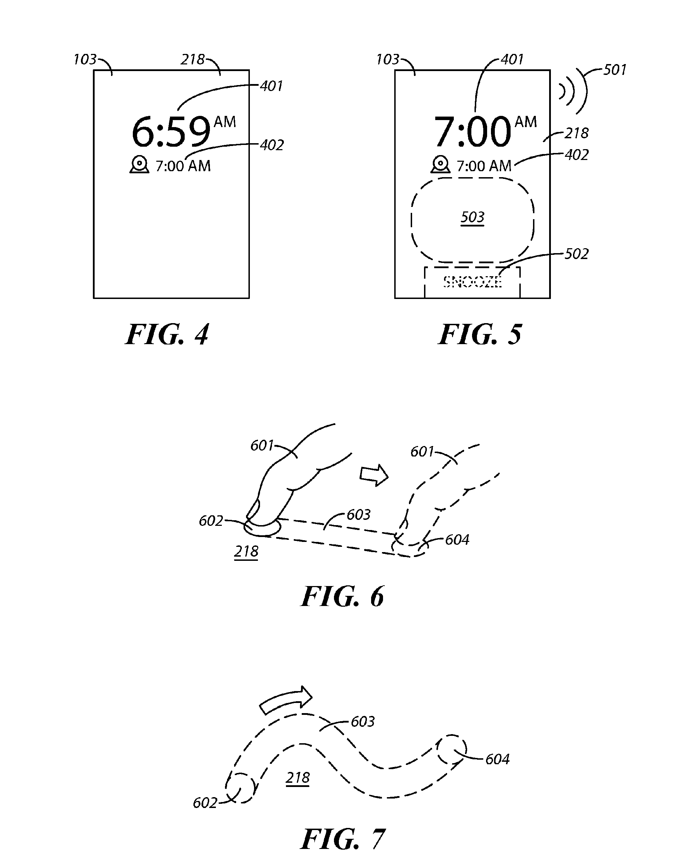

FIG. 3 illustrates a process 300 that the control circuit 101 can carry out in at least partial accord with the present teachings. In this particular example, and without intending any limitations in these regards, the control circuit 101 is configured to selectively serve as an alarm clock. Accordingly, the control circuit 101 keeps track of the present time of day along with at least one alarm time specified by the user. Referring momentarily to FIG. 4, the control circuit can cause the touch-sensitive display 218 to display that present time of day 401 along with an alarm time indicator 402 as input by a user.

Pursuant to this process 300 the control circuit 101 detects 301 a predetermined event. The predetermined event can comprise, for example, a particular time of day such as the aforementioned user-specified alarm time. Upon detecting this predetermined event the control circuit 101 switches 302 to an alarm state.

Referring to FIG. 5, this alarm state can include sounding an audible alarm signal 501 to, for example, awaken a user and/or to otherwise direct their attention with respect to the time of day. This alarm state can also include providing the user with an input opportunity to silence the alarm 501 and to terminate the alarm-clock functionality. In the present example, the user can effect this result by touching the alarm time indicator 402.

If desired, these teachings will optionally accommodate also providing, during the alarm state, a dedicated snooze button 502. By touching this dedicated snooze button 502 the user can cause the control circuit 101 to enter a predefined snooze state. Pursuant to the snooze state the control circuit 101 will temporarily abate the sounding of the audible alarm 501 for some predetermined period of time (such as five minutes, ten minutes, or some other duration of choice). At the conclusion of this snoozing window the control circuit 101 will then again sound the alarm 501.

Regardless of whether the control circuit 101 provides a dedicated snooze button 502, however, the touch-sensitive display 218 also presents at least one non-snooze-specific area 503. By one approach this non-snooze-specific area 503 is devoid of any user-interface indicia such as, but not limited to, buttons, sliders, switches, or other control-surface/interface representations. Accordingly, pursuant to this approach, there is nothing to indicate to the user that any particular action or result can be achieved by gesturing in the non-snooze-specific area 503. (That said, these teachings will accommodate other approaches in these regards. As one simple example, the non-snooze-specific area 503 can be denoted using a differentiating background color or pattern, if desired.)

While in this alarm state the control circuit 101 monitors 303 the non-snooze-specific area 503 for one or more particular user's gestures. These teachings will accommodate a great variety of touch-based gestures as desired. (It will be understood, however, that as used herein a "gesture" does not include an instance or plurality of mere touches or taps.) As shown in FIG. 6 the gesture can comprise a swipe that is a simple substantially-straight line. In this case the user's finger 601 initially touches the touch-screen display 218 at a first location 602 and then slides 603 in a substantially-straight line until the user lifts the finger 601 at a second location 603. This line can be substantially horizontal, substantially vertical, or at essentially any other angle of choice as desired.

As another example, and referring to FIG. 7, the swipe can comprise a substantially non-linear swipe. In this case, the swipe may be defined more in terms of where the swipe begins, ends, and/or its overall length than by its specific shape.

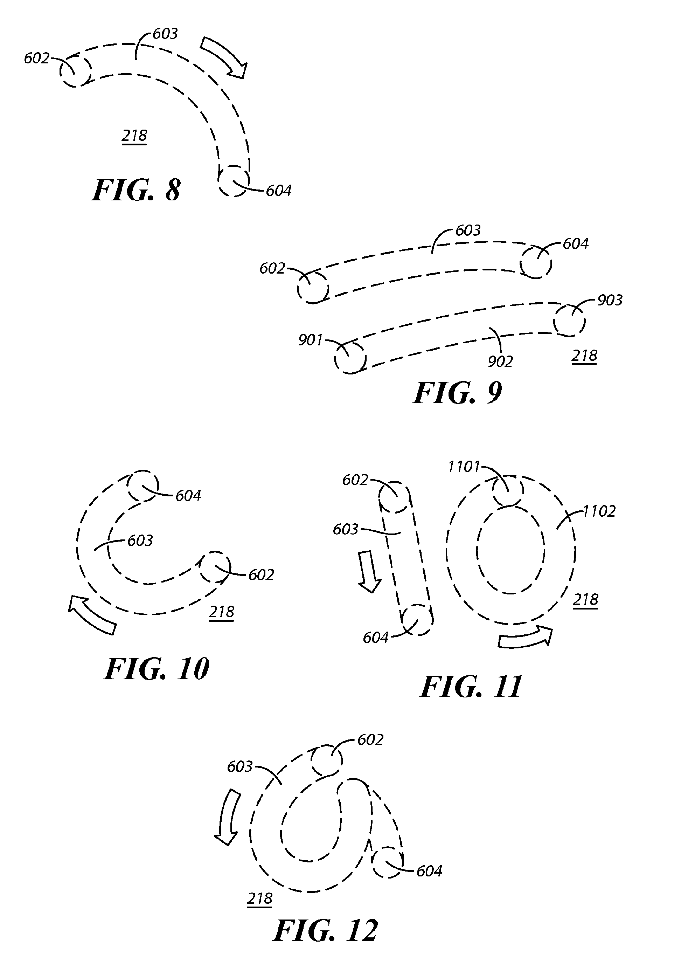

FIG. 8 provides yet another illustrative example in these regards. In this example the swipe comprises an arc. The degree to which the arc must observe a particular radius of curvature in order to serve as the aforementioned user's gesture can be selected and varied as desired to meet the needs of a given application setting.

In addition to accommodate swipes having a variety of shapes these teachings will also accommodate multi-finger swipes. FIG. 9 provides a simple illustrative example in these regards. In addition to a first swipe as described above a second swipe similarly begins at a first location 901 and then slides 902 towards a terminating second location 903. In this particular example the two swipes are substantially parallel but other relative orientations could be accommodated as desired. It will also be understood that any plurality of at least substantially simultaneous and/or sequential swipes can be accommodated as desired.

Referring again to FIG. 3, upon detecting 304 such a user's gesture during the alarm state, the control circuit 101 can responsively and automatically interpret that user's gesture as a snooze instruction regarding the alarm state and then, by one approach, automatically implement 306 that snooze instruction with respect to the alarm state (for example, by temporarily silencing an audible alarm and beginning a short-duration countdown before again audibilizing the alarm). As one optional approach in these regards the control circuit 101 can accompany the implementation 306 of the snooze instruction with a corresponding audible cue 307 (such as a short, distinctive electronic chirp) regarding acknowledgement of the snooze instruction.

In the examples provided above the snooze instruction comprises a simple instruction to begin a predetermined snooze cycle having a predetermined corresponding duration. The present teachings will readily accommodate other approaches in these regards, however. For example, the duration of the snooze cycle can itself be set or modified as a function of the user's initial or subsequent swipe.

As one example in such regards, a swipe having at least a first length (such as one inch) may be sufficient to select the snooze state having a given default duration (such as five minutes). To acknowledge or reflect this situation, if desired, the control circuit 101 can cause the default duration (in this example, "5") to be displayed. If and as the user then continues to extend the length of the swipe the control circuit 101 can then extend the duration of the snooze cycle. The control circuit 101 may indicate these extensions on the display. To illustrate, in this example, the display could begin with "5" and then switch to "6," followed by "7," and so forth as the user extends the length of the swipe.

The incremental amount by which the sleep cycle can be extended in this way can be a non-sequential value if desired. For example, the duration could be extendable in five-minute increments if desired.

Instead of using a straight swipe as just described, these teachings will also accommodate using an arc-shaped swipe. For example, as shown in FIG. 10 the user can use a clockwise arc-shaped swipe to establish the snooze state and/or to set the duration of the snooze cycle. As one simple example in these regards, each full circle could serve to increment the snooze cycle by an additional five minutes.

These same approaches could also serve to reduce a presently-selected snooze duration. For example, if the user inadvertently set the snooze duration inappropriately long (or if a default snooze duration is deemed too long), the user could employ a counter-clockwise arc (i.e., a swipe moving in opposition to the arrow shown in FIG. 10) to reduce the presently-effective snooze duration by some specified amount.

FIG. 11 illustrates another optional approach in these regards. By this approach the user gesture can comprise one or more swipes that also correspond to the shape of a number. In this particular example a first swipe forms the number "1" while a second swipe begins at a first location 1101 and then circles around 1102 to finish at that same first location 1101 (more or less) to form the number "0." The control circuit 101 could then interpret this aggregate number "10" to be the number of minutes to employ for the duration of the snooze state. So configured, the user could enter essentially any numeric character (up to some reasonable maximum number of minutes, seconds, or other measure of time) to use as the snooze duration.

And FIG. 12 illustrates yet another optional approach in these regards. In this example the user's gesture comprises a swipe that forms an alphabetic character (in this case a lower-case "a"). This letter might simply serve as the gesture that the control circuit 101 will recognize as being the snooze instruction to begin a snooze cycle. By another approach, two or more letters of the alphabet can be pre-mapped to different snooze durations. So configured the user can select a specific snooze duration by inputting the appropriate corresponding alphabetic character.

If desired, the control circuit 101 can be figured to permit the user to input a particular swipe shape/pattern and to set that particular swipe shape/pattern as the snooze instruction. Using this approach the user can be permitted to select essentially any essentially arbitrary swipe shape or pattern as their snooze instruction.

The present disclosure may be embodied in other specific forms without departing from these essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method (300) comprising:
by a control circuit (101):
detecting (301) a predetermined event;
in response to detecting the predetermined event, automatically switching to an alarm state (3020;
while in the alarm state, monitoring (303) at least one non-snooze-specific area (503) of a user input (103) for a user's gesture;
in response to detecting (304) the user's gesture while in the alarm state, automatically interpreting (305) the user's gesture as a snooze instruction regarding the alarm state.

2. The method of claim 1 wherein the predetermined event comprises a particular time of day.

3. The method of claim 1 or of claim 2 wherein the alarm state includes an audible alarm signal (501).

4. The method of claim 1 or of claim 2 or of claim 3 wherein the user input comprises a touch-sensitive display (218).

5. The method of claim 4 wherein the at least one non-snooze-specific area of the touch-sensitive display comprises an area devoid of any user-interface indicia.

6. The method of claim 1, or of any of claims 2 to 5, wherein the user's gesture comprises, at least in part, a swipe.

7. The method of claim 6 wherein the swipe comprises at least one of:
a clockwise arc;
a counter-clockwise arc;
a substantially straight line;
a plurality of substantially parallel lines;
a substantially non-linear swipe;
an alphabetic character;
a numeric character.

8. The method of claim 1, or of any of claims 2 to 7, further comprising:
automatically implementing (306) the snooze instruction with respect to the alarm state.

9. The method of claim 7 or of claim 8 further comprising:
providing (307) a corresponding audible cue regarding the snooze instruction.

10. An apparatus configured and arranged to carry out any of the methods of claims 1 through 9.

## Amended claims

### Amended claims in accordance with Rule 137(2) EPC.

**1.** A method (300) comprising:
by a control circuit (101):
detecting (301) a predetermined event;
in response to detecting the predetermined event, automatically switching to an alarm state (302);
while in the alarm state, monitoring (303) at least one area (503) of a user input (103) that is devoid of any user-interface indicia for a user's swipe;
in response to detecting (304) the user's swipe while in the alarm state, automatically interpreting (305) the user's swipe as a snooze instruction regarding the alarm state.

**2.** The method of claim 1 wherein the predetermined event comprises a particular time of day.

**3.** The method of claim 1 wherein the alarm state includes an audible alarm signal (501).

**4.** The method of claim 1 wherein the user input comprises a touch-sensitive display (218).

**7.** The method of claim 1 wherein the swipe comprises at least one of:
a clockwise arc;
a counter-clockwise arc;
a substantially straight line;
a plurality of substantially parallel lines;
a substantially non-linear swipe;
an alphabetic character;
a numeric character.

**8.** The method of claim 1 further comprising:
automatically implementing (306) the snooze instruction with respect to the alarm state.

**9.** The method of claim 7 further comprising:
providing (307) a corresponding audible cue regarding the snooze instruction.

**10.** An apparatus configured and arranged to carry out any of the methods of claims 1 through 9.
